Europäisches Patentamt

(19) European Patent Office

Office européen des brevets

(11) Publication number : **0 297 918 B1**

(12) # EUROPEAN PATENT SPECIFICATION

(45) Date of publication of patent specification :
**14.09.94 Bulletin 94/37**

(21) Application number : **88306047.7**

(22) Date of filing : **01.07.88**

(51) Int. Cl.⁵ : **H04J 3/06, H04N 7/00**

(54) Digital synchronisation.

(30) Priority : **02.07.87 GB 8715597**

(43) Date of publication of application :
**04.01.89 Bulletin 89/01**

(45) Publication of the grant of the patent :
**14.09.94 Bulletin 94/37**

(84) Designated Contracting States :
**DE FR GB**

(56) References cited :
**EP-A- 0 200 269**
**US-A- 4 060 797**

(73) Proprietor : **National Transcommunications
Limited
Crawley Court
Winchester, Hampshire SO21 2QA (GB)**

(72) Inventor : **Gledhill, Jeffrey John
65 Bodycoats Road, Chandlers Ford
Eastleigh, Hampshire (GB)**
Inventor : **Avon, Peter Anthony
17 Moggs Mead
Petersfield, Hampshire GU 31 4NX (GB)**

(74) Representative : **Crawford, Andrew Birkby et al
A.A. THORNTON & CO.
Northumberland House
303-306 High Holborn
London WC1V 7LE (GB)**

## Description

The present invention relates to the detection of a digital sequence present in an information signal for synchronisation purposes.

The use of a digital sequence, usually known as a digital word, for synchronisation purposes is well known but there exists a need for a reliable arrangement which will accurately and quickly detect a specific digital sequence while rejecting other sequences even in the presence of transmission errors.

The present invention provides an arrangement for monitoring an input digital stream on a bit by bit basis for a predetermined sequence of bits and outputting an indication of the result of the monitoring.

Preferably, the arrangement looks for a first predetermined sequence and then for a second, different predetermined sequence expected to occur a predetermined period of time after the first sequence.

The arrangement may be used to detect synchronisation words in audio and/or video signal (broadcast or recorded). When used to detect synchronisation in video signals, the predetermined sequences may occur at line or field frequency.

U.S. patent 4060797 describes a digital telephone system in which digital codes from extension telephones are to be detected within a stream of digitised speech information. This system uses a ROM having as one of its address inputs the digital bitstream and its other address inputs are provided by feedback of output signals from the ROM. As a digital code is detected the ROM steps through a sequence of address locations.

In the system described in U.S. 4060797, when a digital code is partly detected but the next input bit from the digital bitstream is not the expected bit then the system can return to its start address and begin again. Alternatively, some of the digital codes in this system have a common initial sequence and only diverge when the tenth bit is received. In cases where one of thos codes is partly received the tenth bit will determine how the sequence of stepping through ROM addresses proceeds. If an expected bit fails to be detected after this "branching" point in the address sequence then the ROM returns to its start address.

The present invention provides a method of detecting digital synchronisation signals present in an information signal, each digital signal comprising a plurality of digital bits, comprising the steps of:

a) in an initial state monitoring a first bit of said information signal;

b) entering a next state dependent on the value of the monitored bit;

c) outputting a signal indicative of said next state;

d) monitoring the next bit of the information signal;

e) entering a further state dependent on the value of the monitored bit and on the previous output signal;

f) outputting a signal indicative of said further state;

g) repeatedly carrying out steps d)-f) above;

h) monitoring the output signals; and

i) producing synchronisation signals dependent on the monitored output signals.

wherein if in an intermediate state, indicative of partial detection of a synchronisation signal at a first location in the information signal, the monitored next bit of said information signl is not the next bit of said synchronisation signal then the next step may be to enter a further intermediate state, indicative of partial detection of a synchronisation signal at a second location in the information signal, the second location being shifted in the information signal relative to said first location.

The present invention further provides synchronisation detecting apparatus for detecting digital synchronisation signals present in an input information signal, each digital synchronisation signal comprising a plurality of digital bits, the apparatus comprising:

a state machine;

a state decoder responsive to the output of the state machine for producing synchronisation signals;

wherein the state machine comprises means for storing data indicative of a plurality of states, said storing means having a plurality of address inputs and an output ; there is further provided means for applying the output of the storing means to one of the address inputs thereof, and means for applying the input information signal to another of the address inputs of the storing means on a bit by bit basis; and the state of the state machine is indicative of the preceding sequence of bits of the input information signal;

wherein the sequences of states in the state machine are adapted such that if in an intermediate state, indicative of partial detection of a synchronisation signal at a first location in the information signal, the next bit of said information signal input to said another address input of the storing means is not the next bit of said synchronisation signal then the subsequent state of the state machine may be a further intermediate state, indicative of partial detection of a synchronisation signal at a second location in the information signal, the second location being shifted in the information signal relative to said first location.

In order that the present invention be more readily understood, an embodiment thereof will now be described by way of example with reference to the accompanying drawings in which:-

Fig. 1 shows a block diagram of a video sync detector arrangement;

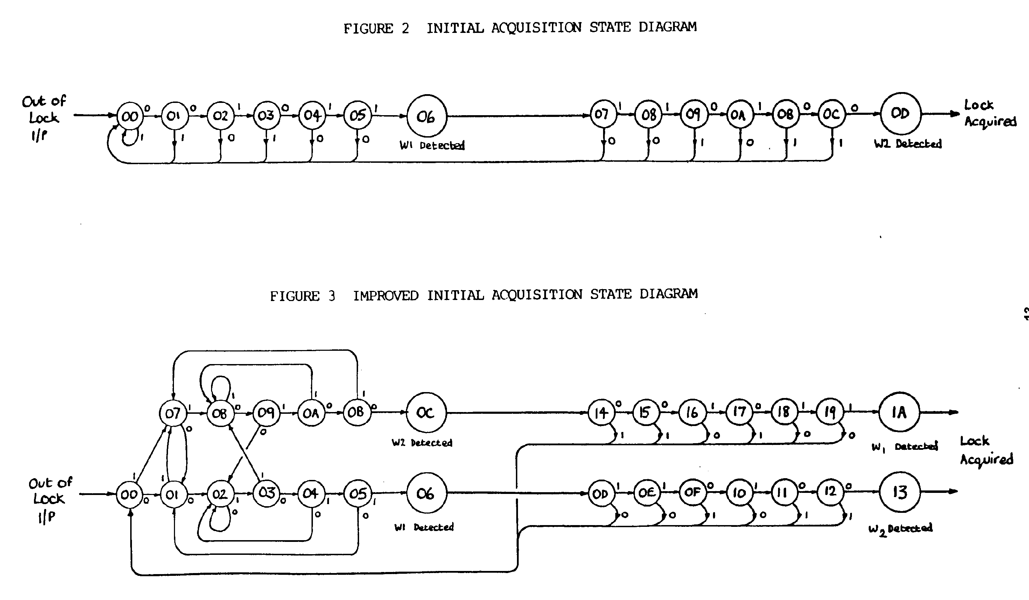

Fig. 2 shows a state diagram representing a basic initial acquisition scheme;

Fig. 3 shows a state diagram of an initial acquisition scheme according to the present invention;

Fig. 4 shows a diagram useful in explaining the operation of a part of the apparatus shown in Figure 1; and

Fig. 5 shows a number of diagrams explaining the operation of the apparatus shown in Figure 1.

The preferred embodiment is an arrangement for detecting sync signals in a broadcast television signal of the multiplexed analog component (MAC) type in which in each field there is at least one digital synchronisation word in the digital signals associated with that line. In other words, the digital synchronisation words may occur at line frequency and/or frame frequency.

The preferred embodiment will be described as adapted to process a particular pattern of synchronisation signals in a MAC signal in which the digital synchronisation words occur at line frequency, the two digital synchronisation words (referred to hereafter as $W_1$ and $W_2$) are complementary and alternate line by line within each frame. Furthermore in the particular pattern of synchronisation signals in relation to which we shall be describing the preferred embodiment the digital synchronisation words alternate except for certain selected lines of each frame (where the sychronisation word is replaced by a word used for other purposes, such as signalling) and for the lines near the frame boundary. At the frame boundary either a frame sychronisation word is provided, or the sequence of line synchronisation words is modified, e.g as follows:

$$W_1 \quad W_2 \quad W_1 \quad W_2 \quad W_1 \quad W_1 \quad \uparrow \quad W_2 \quad W_2 \quad W_1 \quad W_2 \quad W_1 \quad W_2$$

frame boundary

Synchronisation detection apparatus specific to a MAC signal, and to one containing the particular pattern of digital sychronisation words described above, has been disclosed in European patent application no. 84900082.3 (published as W084/02242). In the disclosed apparatus the incoming data is fed to a serial-to-parallel converter whose output is analysed by a digital correlator. The digital correlator produces an error signal indicative of how different the analysed "word" is from the digital synchronisation word $W_1$. In order to detect a line sync this apparatus seeks to detect the sequence $W_1 W_2$ by adding the inverted error signal to a one-line-delayed error signal and thresholding the result. Frame sync is detected in a similar manner.

The present invention provides apparatus very different from that described above, as will become apparent from the following description of a preferred embodiment of the invention operating on a MAC signal having the particular pattern of synchronisation words referred to above. Moreover the present invention is of general application.

Before describing the preferred embodiment in detail certain additional basic information is required. A typical MAC line is 1296 clock period long, and is usually partly occupied with digital data and partly with video data. The problem of sync acquisition is complicated by the fact that the digital data will contain multiple copies of the sync words W1 and W2 and the real sync words will contain errors in the presence of noise. It is also possible that the video data may simulate a sync word. Thus a sync detector must perform three functions:

1. It must locate a correct line sync word and reject false copies;

2. It must maintain lock in the presence of errors; and

3. It must recognise a false lock condition, and on finding one, drop out of lock.

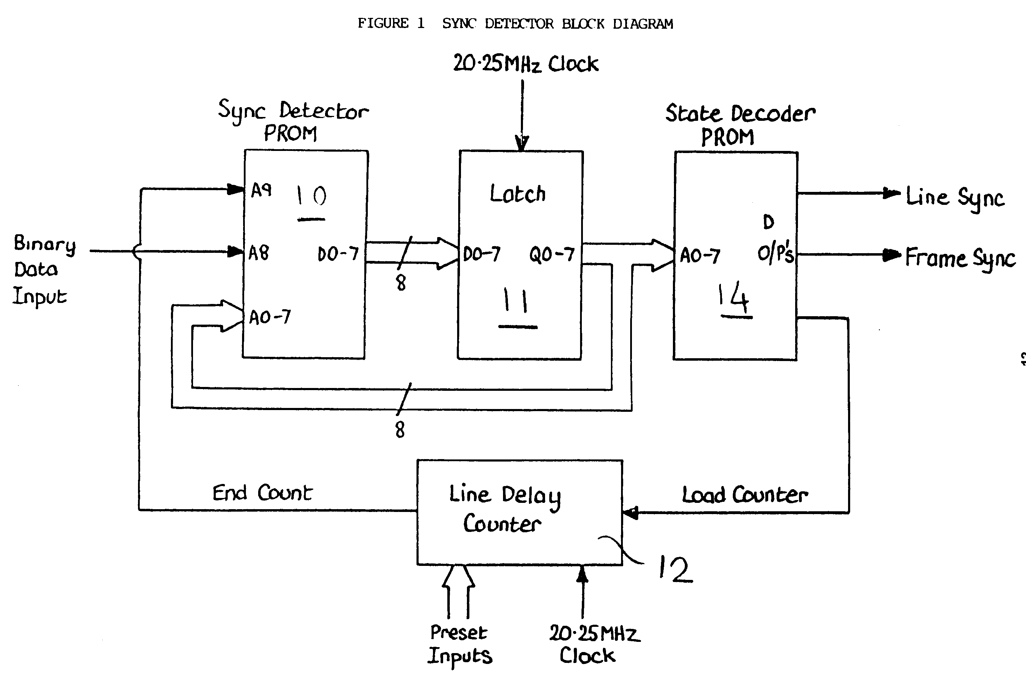

A circuit which performs these functions is shown in Figure 1 where a so called state machine is constructed from a PROM 10 whose output is received by an 8-bit latch 11. The output of the latch 11 is fed back to the input of the PROM 10. In combination with the state machine there is a counter 12 which is used as a line delay for reasons which will become apparent later. A second PROM 14 is connected to the output from the latch 11 and provides two decoded outputs from the state machine which are used to start the counter 12 and to detect a frame sync word, as will be described later.

The output of PROM 10 (D0-7), which via latch 11 forms the input to the decoder PROM 14 and through a path forms part (A0-7) of the address input to PROM 10, is indicative of the state in which the state machine resides at that time. Since the PROM 10 has an 8-bit output, and 8 bits are fed back as address inputs, up to 256 states are available in the state machine. Two further address inputs to the PROM 10 are used, one for the incoming serial data and one to indicate that the counter 12 has counted one line of clock signals.

The apparatus operates in two modes, namely an initial sync acquisition mode and a lock maintenance mode. Initial sync acquisition will now be described.

The strategy for acquiring line syncs is to look for a W1, W2 sync word pair on successive lines with no errors. The chance of finding such a pair in random data is given by $(0.5)^{12} = 2.4 \times 10^{-4}$. The chance of a sync word pair occurring with no errors given even a comparatively high error rate is fairly high. For example, with an error rate of $10^{-1}$, the probability is $(0.9)^{12} = 0.28$. Given that sync word pairs arrive at a rate of nearly 8000 per second, and the probability of a false detection is small, correct sync will be acquired relatively quickly.

Figure (2) shows a possible state diagram for initial acquisition. The first half of the diagram is a standard finite state recogniser for the pattern of 1's and 0's corresponding to the W1 sync word. The sequence enters via state 00 which checks for correspondence with the first bit. If this is correct it passes on to state 01 which checks the second bit and so on. If any bit is found to be incorrect then the state machine restarts from state 0. During state 04 the external line counter is preset to a value appropriate to ensure a line length of 1296 bits. When a correct W1 is found the machine reaches state 06, where it stays until an end of line signal is received from the line counter. The machine can then progress to states 07 to OD where it searches for a completely correct W2 as before. In this way an accurate W1 W2 pair must be found before proceeding to the rest of the state machine which is responsible for maintaining synchronisation in the presence of errors.

Although this acquisition scheme works, it is rather inefficient because it does not look for the W1 sequence in every bit position. With random data it is quite possible that the state machine will be partway through the W1 detector, and hence not in state 0, when W1 arrives. Also every other line contains a W2 and this is not searched for initially.

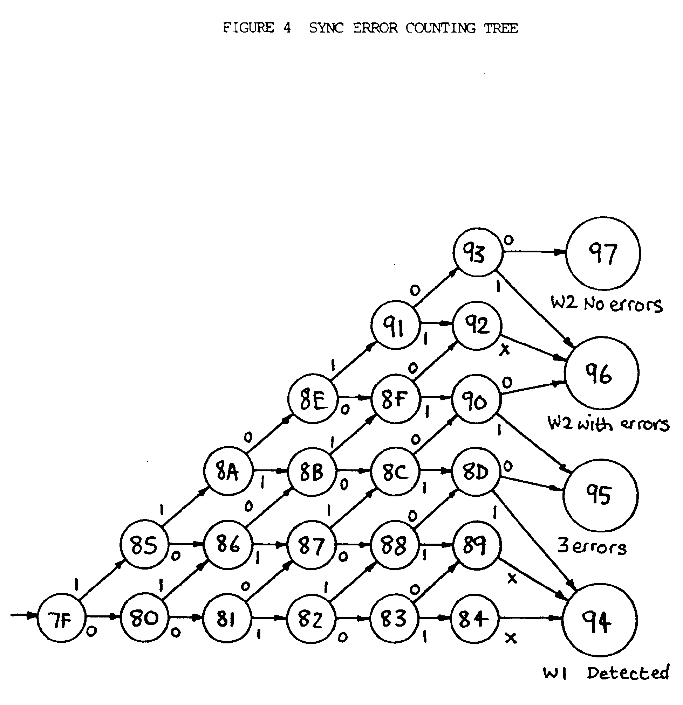

The initial acquisition scheme represented in Figure 3 overcomes both these problems. Firstly, the data is capable of being handled in two parallel channels so that both W1 and W2 can be searched for. Further, instead of resetting to the initial condition when a bit in error is detected, the arrangement shown in Figure 3 permits cross-over between the W1 and W2 detection circuits as well as feedback loops which return the detection circuits to an intermediate rather than initial condition. However, once one of the sync words W1 or W2 is deemed to be detected, any subsequent error in the other of the W1 and W2 pair automatically returns the state machine to its initial condition to restart the sequence and lock is not required.

In more detail, and with specific reference to Figure 3 the states 00 to 05 handle detection of W1 while states 07 to OB detect W2. If the first bit detected in state 00 is a 0 then the sync word may be a W1 and the rest of the word is checked in states 01 to 05; if it is a 1 the sync word may be a W2 and this is checked in states 07 to OB. If any errors are subsequently found, it may be that a sync word is present but in the wrong position. In this case a jump back is made to a position depending on the part of the sync sequence so far detected. An example should make this clear:

Suppose the input data sequence of 001001011. The last six digits of this is a correct W1. But the first four digits look like the start of a W1 and the state machine can progress through states 00,01,02,03 and 04 before getting an erroneous 0. The original scheme would restart and look for a complete W1 starting from the next bit and the sync present in the data would be missed. The improved scheme notes that the bit before the error was a 0, and the bit pattern could be the start of a W1. A jump is therefore made to state 02 so that the W1 is captured even though the detector did not initially start searching in the correct place. Figure (3) shows that several such loops have been implemented to give a detector which looks for a W1 or W2 on every bit position of the data.

Having initially detected a sync word pair the detector must maintain lock in the presence of errors. The detector makes decisions about how reliable its lock is by counting errors over a number of sync words. Figure (4) shows part of the state diagram which counts errors in a single sync word. The states are arbitrarily numbered in this tree structure. If a completely correct sync word arrives the state machine progresses through states 7F,80,81,82,83,84 ending in state 94. If a single error is received the progression is through states one level up. For example if the second bit was in error the route followed would be 7F, 80, 86, 87, 88, 89, 94. Similarly receiving more errors results in a path being followed higher up the tree. Depending on the number of errors, the machine will enter one of states 94,95,96 or 97. It then waits in this state until the line counter reaches the end of its count. Its subsequent behaviour is depending on which of the four states it waits in.

Figure (5) shows the state diagram for the complete line sync detector. The diagram has a single level at the bottom responsible for initial sync acquisition as described earlier. Above this are four pairs of error counting trees 5A,5B,5C and 5D; the trees on the left $5A_1,5B_1,5C_1$ and $5D_1$ detect W1's, those on the right $5A_2,5B_2,5C_2$ and $5D_2$ detect W2's. Each of the trees has four exits. The first (bottom) exit corresponds to the detection of a sync word with less than three errors. The next corresponds to the detection of exactly three, the one above that to four or five errors and the top exit to a sync word with no bits correct. The path between these exits is important to the operation of the sync detector.

Because the word W1 is the ones compliment of W2, if one is trying to detect say W1 but finds every bit of that word to be in error then the detected word must be W2 hence the top exit of each of the error counting trees is indicative of either the desired word with no bits correct, or the detection of the other word of the word pair as indicated in the diagram.

Consider the detector acquiring lock. Having detected a W1 W2 pair the detector resides in state 13, at lower right of the diagram. After a line delay, it proceeds to state B1 (top left). Under conditions of no errors another W1 will be detected followed by a W2 etc. The state machine therefore follows path B1...C6,CA...Df,B1 and so on. If exactly three or exactly six errors are detected the sync detector proceeds to the left most state in the tree one level down. If six errors are detected this is probably due to one of the Frame Sync words. The state decoder PROM, see figure (1), therefore issues a pulse to a frame sync flywheel circuit.

The operation of the state machine at intermediate levels can be summarised as follows:

0,1,2,4 or 5 errors detected: Proceed to the top level 5A;

3 errors detected: Go down one level;

6 errors detected: Issue a frame sync pulse & go down one level.

The behaviour at the top level is the same, except that there is obviously no way of going up a level.

The justification for this will now be explained. Under good error rate conditions, the machine simply alternates between trees at the top level. If the machine acquires false lock, it will in general receive random data. To fall out of lock it must receive line syncs with either 6 or 3 errors four times in a row. The probability of this happening on 4 successive syncs is given by equation 1:

$$(C_3^6 (0.5)^3 (0.5)^3 + (0.5)^6)^4 = 10^{-2} \quad (1)$$

Given 8000 syncs per second this will happen quite quickly. If on the other hand the detector is correctly in lock but errors are being received the probability of lock being lost is small. For example with the high error ratio of .1 the probability of four successive syncs in error is given by equation 2:

$$(C_3^6 (0.1)^3 (0.9)^3 + (0.1)^6)^4 = 5 \times 10^{-8} \quad (2)$$

The mean time between failures should therefore be many hours.

It will thus be seen that in the presence of errors in sync words, the apparatus will maintain lock but will progressively drop down levels should the error rate continue over a succession of line sync word pairs until in the bottom level in the presence of three errors the apparatus moves back into a sync acquisition mode of operation and synchronisation is thus lost.

The arrangement described holds lock reliability down to about 3db carrier/noise ratio with D-MAC.

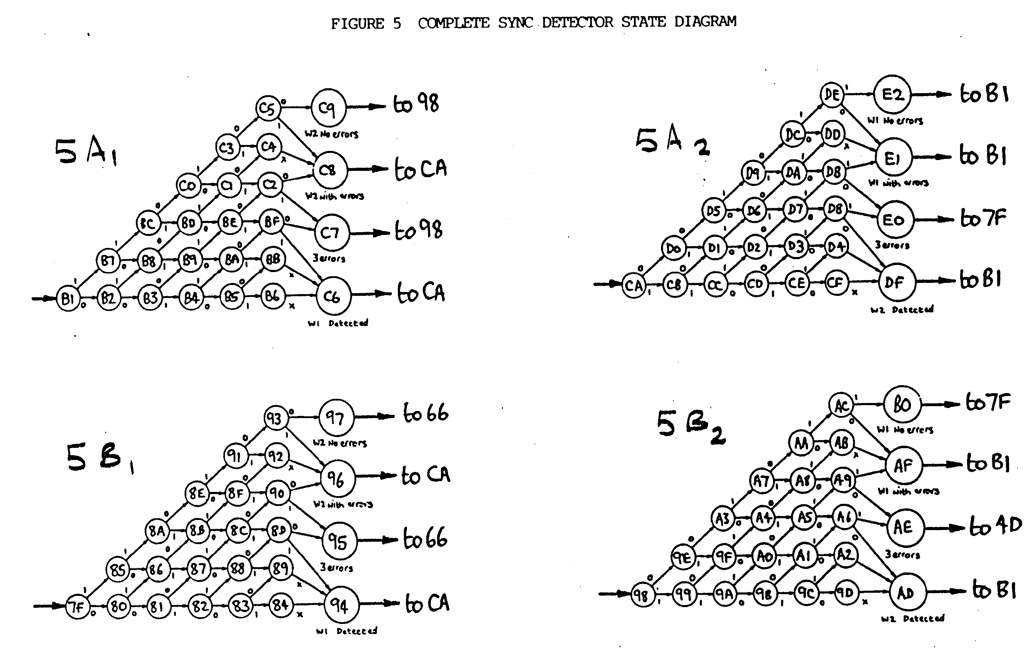

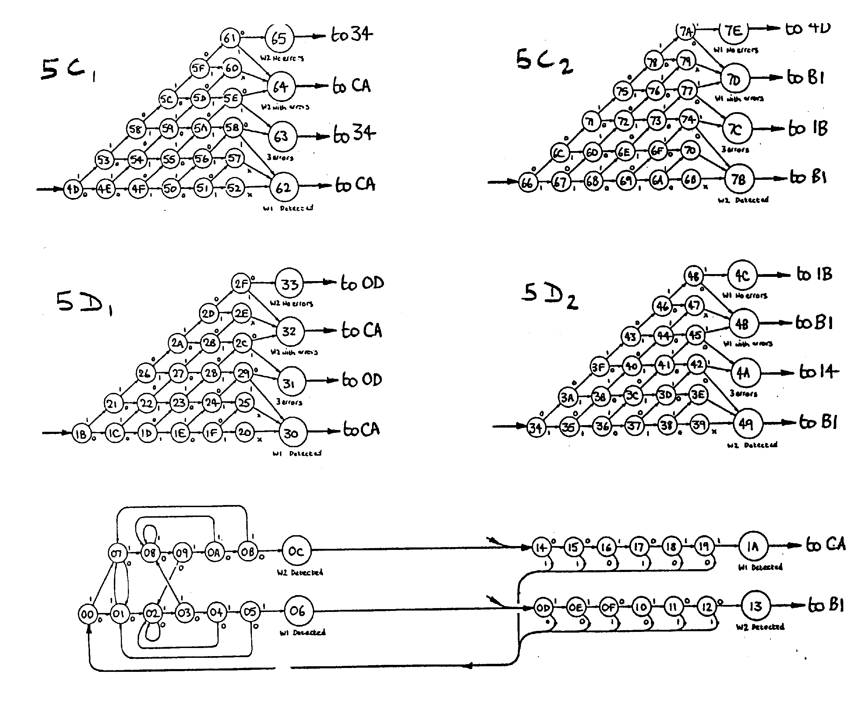

Now that a particular state diagram (Fig. 5) has been described in detail it is appropriate to describe the practical implementation of that state diagram in the apparatus of Fig. 1.

When the sync detector of Fig. 1 is switched on the state detector may be in any state. However, assuming that the state detector is not coincidentally synchronised to the incoming signal, the state detector will soon drop into state 00. In state 00 the fed back address data A0-7 will be indicative of state 00 (e.g. by being numerically equal to zero, i.e. 0000000). The input data is applied to the PROM 10 bit by bit as address input A8. Clearly the value of the input data bit will determine the detector PROM address accessed. If the input data bit is a "1" then at the PROM address accessed the stored data D0-7 will be indicative of state 07 (see Fig. 5), and if the input data bit is "0" then at the (different) PROM address accessed the stored data D0-7 will be indicative of state 01 (i.e. the value of the input data bit determines the next state of the state machine). The dector PROM output D0-7, indicative of non-zero state now, is fed back to serve as next address inputs A0-7 and it can be seen that the value of the next input data bit A8 will determine the next state into which the state machine will pass. Thus the values of the successive input data bits determine the sequence of states through which the state machine passes (and thus the "path" taken through the state diagram).

When the state machine enters a state such as 06, 32 or E2, i.e. a state resulting from the detection of a digital sequence of the correct length (whether or not a correct sync word), the state machine "waits" in that state until the end of the line. This is achieve, as follows:

the PROM 10 outputs data $(D0\text{-}7)_W$ indicative of the "waiting" state, this data is fed back to serve as next address inputs $(A0\text{-}7)_W$, both of the two PROM addresses specifiable by the next input data bit the stored data D0-7 to be read out is indicative of that same "waiting" state. Thus the state machine could be considered to enter a loop. At the end of the line the counter 12 outputs an "end count" signal thus changing the address to be accessed; at the new address data D0-7 is stored indicative of the next state into which the state machine will pass (e.g. OD, CA, B1).

It can be seen that the structure of the state diagram is implemented by storing appropriate data D0-7 at the various addresses of detector PROM 10. Thus it is possible to change the particular state diagram implemented using detector PROM by changing the stored data appropriately. It is also possible to implement the state diagram using other types of memory (e.g. ROM, EPROM etc) dependent upon the particular application or cost of device required. Similarly, gate arrays or programmable logic arrays of suitable complexity could be used.

The production of line and frame sync signals by the state decoder PROM 14 will now be described.

Data indicative of the state in which the state machine resides is fed to the decoder PROM 14 from latch 11 and serves as address inputs A0-7 of the decoder PROM. On reception of data indicative of state 04 (and/or equivalent states in other parts of the state diagram) the deco der PROM sends a "load counter" signal to the line delay counter 12, as mentioned above. On reception of data indicative of a state (e.g. B1,98) other than 00 following a "waiting" state the decoder PROM 14 outputs a sync signal. The particular sync signal output (i.e. line or frame) will depend upon whether a normal $W_1$ $W_2$ etc. sequence of sync words had been detected or whether a frame sync had been detected.

While the above arrangement has been described in relation to the acquisition and maintenance of lock for a television signal of the MAC type, and particularly with line syncs it will be appreciated that the apparatus can be modified to accommodate other schemes which utilise digital words as synchronisation signals. For example, words occurring at frame frequency could also be monitored simply by altering the delay of the counter 12. Equally, it is not necessary that the synchronisation signals be associated with television signals. They could equally be any other information signal which requires synchronisation.

## Claims

1. A method of detecting digital synchronisation signals present in an information signal, each digital signal comprising a plurality of digital bits, comprising the steps of:
   a) in an initial state monitoring a first bit of said information signal;
   b) entering a next state dependent on the value of the monitored bit;
   c) outputting a signal indicative of said next state;
   d) monitoring the next bit of the information signal;
   e) entering a further state dependent on the value of the monitored bit and on the previous output signal;
   f) outputting a signal indicative of said further state;
   g) repeatedly carrying out steps d)-f) above;
   h) monitoring the output signals; and
   i) producing synchronisation signals dependent on the monitored output signals;
     wherein if in an intermediate state, indicative of partial detection of a synchronisation signal at a first location in the information signal, the monitored next bit of said information signal is not the next bit of said synchronisation signal then the next step may be to enter a further intermediate state, indicative of partial detection of a synchronisation signal at a second location in the information signal, the second location being shifted in the information signal relative to said first location.

2. A method according to claim 1, wherein step h) comprises decoding the state information contained in the output signals whereby to identify the sequence of previously monitored digital bits, and step i) comprises producing synchronisation signals dependent on the result of the decoding.

3. A method according to claim 2, wherein a counter is started when the state information decoded in step h) indicates that a predetermined number of bits of a synchronisation signal have been monitored; the counter produces an output signal a predetermined time after being started; and, when a state indicative of the successive monitoring of all bits of a synchronisation signal has been reached, further change of state is inhibited until the next counter output signal is produced.

4. A method according to claim 3, wherein step i) comprises producing a synchronisation signal when the decoded state information is indicative of the first changed state following a period of state change inhibition.

5. A method according to any one of claims 1 to 4, for detecting synchronisation signals present at regular intervals in the information signal, the method further comprising the following steps for maintaining synchronisation in the presence of errors:
   j) after detection of a first synchronisation signal, waiting for a fixed period of time substantially equal to the expected period between synchronisation signals:
   k) monitoring the information signal for another synchronisation signal, either of the same type or of an expected different type compared with said first synchronisation signal;
   l) measuring the number of errors in the monitored information signal when compared with said another synchronisation signal;
   m) if the number of errors is less than a certain threshold, transferring to another set of states indicative of increased confidence in the correct acquisition of a valid synchronisation or, if the current set of states is indicative of the highest degree of confidence, remaining in that set of states; and;

n) if the number of errors is more than a certain threshold transferring to another set of states indicative of decreased confidence in the correct acquisition of a valid synchronisation or, if the current set of states is indicative of the lowest degree of confidence, repeating steps a) to i) for acquisition of synchronisation.

6. Synchronisation detecting apparatus for detecting digital synchronisation signals present in an input information signal, each digital synchronisation signal comprising a plurality of digital bits, the apparatus comprising:

a state machine (10,11);

a state decoder (14) responsive to the output of the state machine for producing synchronisation signals;

wherein the state machine (10,11) comprises means for storing data indicative of a plurality of states, said storing means (10) having a plurality of address inputs (A0-9) and an output (D0-7); there is further provided means for applying the output of the storing means to one of the address inputs (A0-7) thereof, and means for applying the input information signal to another of the address inputs (A8) of the storing means (10) on a bit by bit basis; and the state of the state machine is indicative of the preceding sequence of bits of the input information signal;

wherein the sequences of states in the state machine are adapted such that if in an intermediate state, indicative of partial detection of a synchronisation signal at a first location in the information signal, the next bit of said information signal input to said another address input (A8) of the storing means is not the next bit of said synchronisation signal then the subsequent state of the state machine may be a further intermediate state, indicative of partial detection of a synchronisation signal at a second location in the information signal, the second location being shifted in the information signal relative to said first location.

7. Synchronisation detection apparatus according to claim 6, wherein the input information signal comprises a plurality of digital synchronisation signals spaced apart in the information signal by a predetermined time, and there is further provided means (12) responsive to the state of the state machine for supplying a signal to another address input (A9) of the storing means when the predetermined time is deemed to have elapsed.

8. Synchronisation detection apparatus according to claim 6 or 7, wherein the state machine is operative in a synchronisation acquisition mode and a lock maintenance mode, and the state machine is adapted in the lock maintenance mode to maintain lock dependent on the presence, absence, or number of errors occurring in successive detected synchronisation signals.

9. Synchronisation detection apparatus according to claim 7, for maintaining synchronisation once it is acquired, wherein:

the state machine has several sets of states indicative of different levels of confidence in the synchronisation acquired and is adapted to step through a set of states as successive bits of the information signal which are expected to be a synchronisation signal are input to the storing means (10); each set of states having a plurality of end states each indicative of different numbers of errors in the input information signal compared with the expected synchronisation signal; the state machine is adapted on reaching the end state of one set of states to transfer from said one set of states to another set indicative of an increased level of confidence, or if said end state is indicative of the highest level of confidence to remain in said one set of states, if said end state corresponds to a number of errors below a threshold, and to transfer from said one set of states to another indicative of a decreased level of confidence, or if one set of states is indicative of the lowest level of confidence to return to a synchronisation acquisition state, if said end state corresponds to a number of errors above a certain threshold.

10. Synchronisation detection apparatus according to any one of claims 6 to 9, wherein the input information signal comprises two different digital synchronisation signals, the state machine is operative in a synchronisation acquisition mode and a lock maintenance mode, and the state machine is adapted in the synchronisation acquisition mode to pass directly from a state indicative of the previous input of a plurality of bits of one of the digital synchronisation signals to a state indicative of the previous input of a plurality of bits of the other of the digital synchronisation signals dependent on the value of the input information signal bit applied to the state machine.

## Patentansprüche

1. Verfahren zum Erfassen von in einem Informationssignal vorhandenen digitalen Synchronisationssignalen, von denen jedes digitale Signal eine Vielzahl von Digital-Bits umfaßt, mit den Schritten:
   a) Überwachen eines ersten Bits des Informationssignals in einem Initialstatus;
   b) Eintreten in einen nächsten Status in Abhängigkeit von dem Wert des überwachten Bits;
   c) Ausgeben eines für den nächsten Status bezeichnenden Signals;
   d) Überwachen des nächsten Bits des Informationssignals;
   e) Eintreten in einen weiteren Status in Abhängigkeit von dem Wert des überwachten Bits und des vorherigen Ausgangssignals;
   f) Ausgeben eines für den weiteren Status bezeichnenden Signals;
   g) wiederholtes Ausführen der vorigen Schritte d)-f);
   h) Überwachen der Ausgangssignale; und
   i) Erzeugen von Synchronisationssignalen in Abhängigkeit von den überwachten Ausgangssignalen;
   wobei, wenn in einem für teilweise Erfassung eines Synchronisationssignals an einer ersten Stelle des Informationssignals bezeichnenden Zwischenstatus das überwachte nächste Bit des Informationssignals nicht das nächste Bit des Synchronisationssignals ist, der nächste Schritt sein kann, in einen weiteren Zwischenstatus einzutreten, der für partielle Erfassung eines Synchronisationssignals an einem zweiten Ort in dem Informationssignal bezeichnend ist, wobei der zweite Ort in dem Informationssignal relativ zum ersten Ort verschoben ist.

2. Verfahren nach Anspruch 1, bei dem Schritt h) das Dekodieren der in den Ausgangssignalen enthaltenen Statusinformation umfaßt, um dadurch die Abfolge von vorher überwachten Digitalbits zu identifizieren, und Schritt i) das Erzeugen von Synchronisationssignalen in Abhängigkeit von dem Ergebnis der Dekodierung umfaßt.

3. Verfahren nach Anspruch 2, bei dem ein Zähler gestartet wird, wenn die im Schritt h) dekodierte Statusinformation anzeigt, daß eine vorbestimmte Anzahl von Bits eines Synchronisationssignals überwacht wurde; der Zähler in einem vorbestimmten Zeitabstand, nachdem er gestartet wurde, ein Ausgangssignal erzeugt; und, wenn ein für das aufeinanderfolgende Überwachen aller Bits eines Synchronisationssignals bezeichnender Status erreicht wurde, eine weitere Statusänderung gesperrt wird, bis das nächste Zähler-Ausgangssignal erzeugt wird.

4. Verfahren nach Anspruch 3, bei dem Schritt i) das Erzeugen eines Synchronisationssignals umfaßt, wenn die dekodierte Statusinformation für den ersten geänderten Status nach einem Zeitraum von Statusänderungs-Sperrung bezeichnend ist.

5. Verfahren nach einem der Ansprüche 1 bis 4 zum Erfassen von mit regelmäßigen Abständen in dem Informationssignal vorhandenen Synchronisationssignalen, welches Verfahren weiter die folgenden Schritte zum Aufrechterhalten von Synchronisation in Anwesenheit von Fehlern umfaßt:
   j) nach dem Erfassen eines ersten Synchronisationssignals, Abwarten während eines festgelegten Zeitraums, der im wesentlichen gleich dem zwischen Synchronisationssignalen erwarteten Zeitraum ist:
   k) Überwachen des Informationssignals nach einem weiteren Synchronisationssignal, entweder vom gleichen Typ oder von einem erwarteten unterschiedlichen Typ im Vergleich zum ersten Synchronisationssignal;
   l) Messen der Fehlerzahl in dem überwachten Informationssignal im Vergleich zum anderen Synchronisationssignal;
   m) falls die Fehlerzahl kleiner als ein gewisser Schwellwert ist, Übergehen zu einer anderen Reihe von Statusgrößen, die für erhöhtes Vertrauen in die korrekte Erfassung einer gültigen Synchronisation bezeichnend ist, oder falls der gegenwärtige Satz von Statusgrößen für den höchsten Vertrauensgrad bezeichnend ist, Verbleiben bei diesem Satz von Statusgrößen; und;
   n) falls die Fehlerzahl größer als ein gewisser Schwellwert ist, Übergehen zu einer anderen Reihe von Statusgrößen, die für vermindertes Vertrauen in die korrekte Erfassung einer gültigen Synchronisation bezeichnend ist, oder, falls der gegenwärtige Satz von Statusgrößen für den untersten Vertrauensgrad bezeichnend ist, Wiederholen der Schritte a) bis i) zum Erfassen einer Synchronisation.

6. Synchronisations-Erfassungsvorrichtung zum Erfassen von in einem eingehenden Informationssignal vorhandenen digitalen Synchronisationssignalen, von denen jedes digitale Synchronisationssignal eine Vielzahl von Digital-Bits umfaßt, und die Vorrichtung umfaßt:

eine Statusmaschine (10, 11);

einen Statusdekodierer (14), der auf das Ausgangssignal der Statusmaschine mit Erzeugung von Synchronisationssignalen reagiert;

wobei die Statusmaschine (10, 11) Mittel zum Speichern von für eine Vielzahl von Statusgrößen bezeichnenden Daten umfaßt, welche Speichermittel (10) eine Vielzahl von Adreß-Eingängen (A0-9) und einen Ausgang (D0-7) besitzen; weiter Mittel vorgesehen sind zum Anlegen des Ausgangssignals des Speichermittels an einen der Adreß-Eingänge (A0-7) desselben und Mittel zum Anlegen des eingehenden Informationssignals an einen weiteren Adreß-Eingang (A8) des Speichermittels (10) auf Bit-um-Bit-Basis; und der Status der Statusmaschine für die vorhergehende Folge von Bits des eingehenden Informationssignals bezeichnend ist; wobei die Folge von Statusgrößen in der Statusmaschine so ausgelegt ist, daß, wenn sie sich in einem Zwischenstatus befindet, der für eine teilweise Erfassung eines Synchronisationssignals an eine ersten Ort in dem Informationssignal bezeichnend ist, das nächste Bit des Informationssignaleingangs an den anderen Adreß-Eingang (A8) des Speichermittels nicht das nächste Bit des Synchronisationssignals ist, der darauffolgende Status der Statusmaschine ein weiterer Zwischenstatus sein kann, der für teilweise Erfassung eines Synchronisationssignals an einem zweiten Ort in dem Informationssignal bezeichnend ist, wobei der zweite Ort in dem Informationssignal relativ zu dem ersten Ort verschoben ist.

7. Synchronisations-Erfassungsvorrichtung nach Anspruch 6, bei der das eingehende Informationssignal eine Vielzahl von digitalen Synchronisationssignalen umfaßt, die in dem Informationssignal mit einem vorbestimmten Zeitabstand auftreten, und daß weiter Mittel (12) vorgesehen sind, die auf den Status der Statusmaschine reagieren mit Zuführen eines Signals an einen weiteren Adreß-Eingang (A9) des Speichermittels, wenn ein vorbestimmter Zeitraum als verstrichen angesehen wird.

8. Synchronisations-Erfassungsvorrichtung nach Anspruch 6 oder 7, bei der die Statusmaschine in einem Synchronisations-Erfassungsbetrieb und einem Rast-Aufrechterhaltungsbetrieb wirksam ist, und die Statusmaschine in dem RastAufrechterhaltungsbetrieb ausgelegt ist, Verrastung in Abhängigkeit von der Anwesenheit von Fehlern, Abwesenheit von Fehlern oder der Fehlerzahl in aufeinanderfolgend erfaßten Synchronisationssignalen aufrecht zu erhalten.

9. Synchronisations-Erfassungsvorrichtung nach Anspruch 7 zum Aufrechterhalten von Synchronisation, sobald sie erfaßt wurde, bei der:

die Statusmaschine verschiedene Sätze von Statusgrößen besitzt, die für unterschiedliche Niveaus von Vertrauen in die erfaßte Synchronisation bezeichnend sind, und ausgelegt ist, durch einen Satz von Statusgrößen während aufeinanderfolgende Bits des Informationssignals hindurchzuschreiten, die als ein Synchronisationssignal erwartet und in das Speichermittel (10) eingegeben werden; jeder Satz von Statuswerten eine Vielzahl von Endstatuswerten besitzt., die jeweils für unterschiedliche Fehler-Anzahlen in dem eingehenden Informationssignal im Vergleich mit dem erwarteten Synchronisationssignal bezeichnend sind; die Statusmaschine ausgelegt ist, beim Erreichen des Endstatus eines Satzes von Statuswerten von dem einen Satz von Statuswerten zu einem anderen Satz überzugehen, der für ein erhöhtes Vertrauens-Niveau bezeichnend ist, oder wenn der Endstatus für das höchste Vertrauens-Niveau bezeichnend ist, in diesem einen Satz von Statusgrößen zu verbleiben, falls der Endstatus einer Fehlerzahl unter einem Schwellwert entspricht, und von dem einen Satz von Statusgrößen zu einem anderen überzugehen, der für ein vermindertes Vertrauens-Niveau bezeichnend ist, oder wenn ein Satz von Statusgrößen für das geringste Vertrauens-Niveau bezeichnend ist, zu einem Synchronisations-Erfassungsstatus zurückzukehren, falls der Endstatus einer Fehlerzahl über einer bestimmten Schwelle entspricht.

10. Synchronisations-Erfassungsvorrichtung nach einem der Ansprüche 6 bis 9, bei der das Eingangs-Informationssignal zwei unterschiedliche digitale Synchronisationssignale umfaßt, die Statusmaschine in einem SynchronisationsErfassungsbetrieb und einem Verrastungs-AufrechterhalteBetrieb betrieben wird und die Statusmaschine ausgelegt ist, in dem Synchronisations-Erfassungsbetrieb direkt von einem für die vorherige Eingabe einer Vielzahl von Bits eines der digitalen Synchronisationssignale bezeichnenden Status zu einem für die vorherige Eingabe einer Vielzahl von Bits des anderen digitalen Synchronisationssignals überzugehen in Abhängigkeit von dem Wert des an die Statusmaschine angelegten eingehenden Informationssignal-Bits.

**Revendications**

1. Un procédé de détection de signaux de synchronisation numériques présents dans un signal d'information, chaque signal numérique comprenant un ensemble de bits, comprenant les étapes suivantes :

    a) dans un état initial, on contrôle un premier bit du signal d'information ;

    b) on passe dans un état suivant sous la dépendance de la valeur du bit contrôlé ;

    c) on émet un signal indiquant cet état suivant ;

    d) on contrôle le bit suivant du signal d'information ;

    e) on passe dans un état ultérieur sous la dépendance de la valeur du bit contrôlé et du signal de sortie précédent ;

    f) on émet un signal indiquant l'état ultérieur précité ;

    g) on accomplit de façon répétée les étapes d)-f) ci-dessus ;

    h) on contrôle les signaux de sortie ; et

    i) on produit des signaux de synchronisation sous la dépendance des signaux de sortie contrôlés ;

    dans lequel si dans un état intermédiaire, indiquant une détection partielle d'un signal de synchronisation à un premier emplacement dans le signal d'information, le bit suivant contrôlé du signal d'information n'est pas le bit suivant du signal de synchronisation, alors l'étape suivante peut consister à entrer dans un état intermédiaire ultérieur, indiquant une détection partielle d'un signal de synchronisation à un second emplacement dans le signal d'information, le second emplacement étant décalé dans le signal d'information par rapport au premier emplacement.

2. Un procédé selon la revendication 1, dans lequel l'étape h) comprend le décodage de l'information d'état qui est contenue dans les signaux de sortie, pour identifier ainsi la séquence de bits contrôlés précédemment, et l'étape i) comprend la génération de signaux de synchronisation sous la dépendance du résultat du décodage.

3. Un procédé selon la revendication 2, dans lequel on fait démarrer un compteur lorsque l'information d'état qui est décodé à l'étape h) indique qu'un nombre prédéterminé de bits d'un signal de synchronisation ont été contrôlés ; le compteur produit un signal de sortie au bout d'un intervalle de temps prédéterminé après qu'on l'a fait démarrer ; et lorsqu'un état indiquant le contrôle successif de tous les bits d'un signal de synchronisation a été atteint, un changement d'état ultérieur est interdit jusqu'à ce que le signal de sortie de compteur suivant soit produit.

4. Un procédé selon la revendication 3, dans lequel l'étape i) comprend la génération d'un signal de synchronisation lorsque l'information d'état décodée indique le premier état changé, à la suite d'une période d'interdiction de changement d'état.

5. Un procédé selon l'une quelconque des revendications 1 à 4, pour la détection de signaux de synchronisation présents à des intervalles réguliers dans le signal d'information, le procédé comprenant en outre les étapes suivantes, pour maintenir la synchronisation en présence d'erreurs :

    j) après la détection d'un premier signal de synchronisation, on attend pendant une durée fixe pratiquement égale à la durée prévue entre des signaux de synchronisation ;

    k) on contrôle le signal d'information pour détecter un autre signal de synchronisation, du même type ou d'un type différent prévu, en comparaison avec le premier signal de synchronisation ;

    l) on mesure le nombre d'erreurs dans le signal d'information contrôlé, par comparaison avec l'autre signal de synchronisation ;

    m) si le nombre d'erreurs est inférieur à un certain seuil, on passe à un autre ensemble d'états indiquant une confiance accrue dans l'acquisition correcte d'une synchronisation valide, ou bien si l'ensemble d'états courant indique le degré de confiance le plus élevé, on reste dans cet ensemble d'états ; et

    n) si le nombre d'erreurs est supérieur à un certain seuil, on passe à un autre ensemble d'états indiquant une confiance diminuée dans l'acquisition correcte d'une synchronisation valide, ou bien si l'ensemble d'états courant indique le plus faible degré de confiance, on répète les étapes a) à i) pour l'acquisition de la synchronisation.

6. Appareil de détection de synchronisation destiné à détecter des signaux de synchronisation numériques présents dans un signal d'information d'entrée, chaque signal de synchronisation numérique comprenant un ensemble de bits, l'appareil comprenant :

    un automate à états finis (10, 11) ;

un décodeur d'états (14) qui réagit à l'information de sortie de l'automate à états finis en produisant des signaux de synchronisation ;

dans lequel l'automate à états finis (10, 11) comprend des moyens pour enregistrer des données indiquant un ensemble d'états, ces moyens d'enregistrement (10) ayant un ensemble d'entrées d'adresse (A0-9) et une sortie (D0-7) ; il existe en outre des moyens pour appliquer le signal de sortie des moyens d'enregistrement à l'une des entrées d'adresse (A0-7) de ces derniers, et des moyens pour appliquer le signal d'information d'entrée à une autre des entrées d'adresse (A8) des moyens d'enregistrement (10), en procédant bit par bit ; et l'état de l'automate à états finis indique la séquence de bits précédente du signal d'information d'entrée ;

dans lequel les séquences d'états dans l'automate à états finis sont conçues de façon que si dans un état intermédiaire, indiquant une détection partielle d'un signal de synchronisation à un premier emplacement dans le signal d'information, le bit suivant du signal d'information qui est appliqué à l'autre entrée d'adresse (A8) des moyens d'enregistrement, n'est pas le bit suivant du signal de synchronisation, alors l'état suivant de l'automate à états finis peut être un état intermédiaire ultérieur, indiquant une détection partielle d'un signal de synchronisation à un second emplacement dans le signal d'information, ce second emplacement étant décalé dans le signal d'information par rapport au premier emplacement.

7.  Appareil de détection de synchronisation selon la revendication 6, dans lequel le signal d'information d'entrée comprend un ensemble de signaux de synchronisation numériques mutuellement espacés d'un intervalle de temps prédéterminé dans le signal d'information, et il existe en outre des moyens (12) qui réagissent à l'état de l'automate à états finis en appliquant un signal à une autre entrée d'adresse (A9) des moyens d'enregistrement lorsqu'on estime que l'intervalle de temps prédéterminé s'est écoulé.

8.  Appareil de détection de synchronisation selon la revendication 6 ou 7, dans lequel l'automate à états finis peut fonctionner dans un mode d'acquisition de synchronisation et dans une mode de maintien de verrouillage, et dans le mode de maintien de verrouillage l'automate à états finis est conçu pour maintenir le verrouillage sous la dépendance de la présence, de l'absence ou du nombre d'erreurs apparaissant dans des signaux de synchronisation détectés successifs.

9.  Appareil de détection de synchronisation selon la revendication 7, conçu pour maintenir la synchronisation une fois qu'elle a été acquise, dans lequel :

l'automate à états finis comporte plusieurs ensembles d'états indiquant différents niveaux de confiance dans la synchronisation acquise, et il est conçu de façon à passer pas à pas par un ensemble d'états au fur et à mesure que des bits successifs du signal d'information qui sont supposés être des bits d'un signal de synchronisation, sont introduits dans les moyens d'enregistrement (10) ; chaque ensemble d'états comportant plusieurs états finals indiquant chacun différents nombres d'erreurs dans le signal d'information d'entrée, en comparaison avec le signal de synchronisation prévu ; lorsque l'automate à états finis atteint l'état final d'un ensemble d'états, il passe de cet ensemble d'états à un autre ensemble indiquant un niveau de confiance accru, ou bien si l'état final indique le niveau de confiance le plus élevé, il reste dans l'ensemble d'états dans lequel il se trouve, si l'état final correspond à un nombre d'erreurs inférieur à un seuil, et il passe de l'ensemble d'états dans lequel il se trouve à un autre ensemble indiquant un niveau de confiance diminué, ou bien si l'ensemble d'états dans lequel il se trouve indique le niveau de confiance le plus bas, il retourne à un état d'acquisition de synchronisation, si l'état final correspond à un nombre d'erreurs supérieur à un certain seuil.

10.  Appareil de détection de synchronisation selon l'une quelconque des revendications 6 à 9, dans lequel le signal d'information d'entrée comprend deux signaux de synchronisation numériques différents, l'automate à états finis peut fonctionner dans un mode d'acquisition de synchronisation et dans un mode de maintien de verrouillage, et dans le mode d'acquisition de synchronisation l'automate à états finis passe directement d'un état indiquant l'introduction précédente d'un ensemble de bits de l'un des signaux de synchronisation numériques, à un état indiquant l'introduction précédente d'un ensemble de bits de l'autre signal de synchronisation numérique, sous la dépendance de la valeur du bit du signal d'information d'entrée qui est appliqué à l'automate à états finis.

FIGURE 1  SYNC DETECTOR BLOCK DIAGRAM

12

EP 0 297 918 B1

FIGURE 2  INITIAL ACQUISITION STATE DIAGRAM

FIGURE 3  IMPROVED INITIAL ACQUISITION STATE DIAGRAM

13

FIGURE 4   SYNC ERROR COUNTING TREE

FIGURE 5   COMPLETE SYNC DETECTOR STATE DIAGRAM